# EUROPÄISCHE PATENTSCHRIFT

(11) **EP 4 603 304 B1**
(45) Veröffentlichungstag und Bekanntmachung des Hinweises auf die Patenterteilung: **18.11.2026**
(21) Anmeldenummer: 25153782.5
(22) Anmeldetag: 24.01.2025
(51) Int. Cl.: B60C 11/03, B60C 11/12

(54) **FAHRZEUGREIFEN**
VEHICLE TYRE
BANDAGE PNEUMATIQUE POUR VÉHICULES

(30) Priorität: 15.02.2024 DE 102024201386
(43) Veröffentlichungstag der Anmeldung: 20.08.2025
(73) Patentinhaber: Continental Reifen Deutschland GmbH, 30175 Hannover (DE)
(72) Erfinder: Brockmann, Jürgen, 30175 Hannover (DE); Heinhaupt, Torsten, 30175 Hannover (DE); Herbst, Stephan, 30175 Hannover (DE); Brandau, Christian, 30175 Hannover (DE)
(74) Vertreter: Continental Corporation

(56) Entgegenhaltungen:
- DE-A1- 102016 224 365
- DE-A1- 102020 132 590
- JP-A- 2015 212 146
- JP-A- 2022 048 823
- JP-A- H10 309 910
- US-A1- 2015 231 930
- US-A1- 2019 210 410

## Beschreibung

Die Erfindung betrifft einen Fahrzeugreifen mit einem Laufstreifen mit zumindest einer Profilblockreihe mit in Umfangsrichtung aufeinanderfolgenden Profilblöcken, welche durch parallel zueinander verlaufende Querrillen und an zumindest einer Seite - entweder gemeinsam oder jeweils - von einer weiteren Rille begrenzt sind und an den Querrillen Blockkanten aufweisen,
wobei die Querrillen je einem Rillengrund und, im Längsschnitt betrachtet, eine durch die tiefsten Stellen des Rillengrunds definierte Tiefenverlauflinie aufweisen, wobei zu den Profilblöcken solche gehören, welche mit zumindest drei in Umfangsrichtung aufeinanderfolgenden Einschnitten versehen, insbesondere durchquert, sind, wobei die Einschnitte in die weitere bzw. die an den Profilblock jeweils angrenzende weitere Rille einmünden, in Draufsicht betrachtet und bezogen auf in ihrer Erstreckungsrichtung ausgerichtete Einschnittbasislinien, bezüglich der Umfangsrichtung gleichsinnig geneigt, insbesondere parallel, zu den Blockkanten verlaufen und einen Einschnittgrund und eine Breite von 0,40 mm bis 2,00 mm aufweisen, wobei zu den Einschnitten zwei übereinstimmend ausgeführte randseitige Einschnitte und ein einziger mittiger Einschnitt oder mehrere übereinstimmend ausgeführte mittige Einschnitte gehören, wobei sich der bzw. jeder mittige Einschnitt von den randseitigen Einschnitten im Hinblick auf seinen Tiefenverlauf unterscheidet.

Ein derartiger Fahrzeugreifen ist beispielsweise aus der DE 10 2016 224 365 A1 bekannt. Der Fahrzeugreifen weist einen Laufstreifen mit einer in 50 bis 60 Pitches gegliederten Profilblockreihe mit mittleren Profilblöcken mit in Draufsicht zur axialen Richtung unter einem Winkel von 5° bis 30° verlaufenden Blockkanten auf, wobei die mittleren Profilblöcke jeweils mit zumindest drei parallel zu den Blockkanten verlaufenden, durchquerenden Einschnitten mit einer Breite von 0,3 mm bis 0,8 mm versehen sind. Beim gezeigten Ausführungsbeispiel sind - je nach Pitch - drei bis fünf Einschnitte in jedem mittleren Profilblock vorgesehen. Sind drei Einschnitte vorgesehen, gehört zu diesen ein einziger mittiger Einschnitt und zwei randseitige Einschnitte. Der mittige Einschnitt weist eine maximale, insbesondere konstante Tiefe von 70% bis 100% der Profiltiefe auf. Die randseitigen Einschnitte weisen jeweils einen mittleren Einschnittabschnitt mit einer Tiefe 70% bis 100% der Profiltiefe und zwei seitliche Einschnittabschnitte mit einer Tiefe von höchstens 60% der Profiltiefe auf. Durch die getroffenen Maßnahmen soll bei der vorgesehenen, geringen Pitchanzahl von 50 bis 60 Pitches das Abrollgeräusch merklich reduziert sein.

Ein weiterer Fahrzeugluftreifen der eingangs genannten Art ist aus der JP 2015 212 146 A bekannt. Dieser weist einem Laufstreifen mit Umfangs- und Querrillen sowie mit Profilblockreihen mit Profilblöcken auf, wobei jeder Profilblock beispielsweise von vier in axialer Richtung verlaufenden Einschnitten durchquert ist. Gemäß einer Ausführung sind die randseitigen Einschnitte jeweils mit drei Grundanhebungen versehen und die mittleren Einschnitte sind frei von Grundanhebungen. Gemäß einer zweiten Ausführung ist zusätzlich in den mittigen Einschnitten je eine einzige randseitige Grundanhebung ausgebildet. Gemäß einer dritten Ausführung sind in den mittigen Einschnitten und den randseitigen Einschnitten jeweils genau drei Grundanhebungen ausgebildet. Die Grundanhebungen beeinflussen die Steifigkeit der Profilblöcke derart, dass die Brems- und die Trockenhandlingperformance verbessert ist.

Es ist bekannt, dass bei Fahrzeugreifen der eingangs genannten Art die in den Profilblöcken des Laufstreifens ausgebildeten Einschnitte für die Schneeperformance von entscheidender Bedeutung sind. Die Einschnitte verringern gleichzeitig die Steifigkeit der Profilblöcke, wodurch die Biegsamkeit der Profilblöcke zunimmt, diese unter Belastung stärker deformiert bzw. gebogen werden, sodass sich die Kontaktfläche der Profilblöcke zum Untergrund verringert und derart die Trockenperformance, beispielsweise die Kraftübertragung auf den Untergrund, beeinträchtigt ist. Bei den aus der DE 10 2016 224 365 A1 bekannten, innerhalb eines mittleren Profilblocks vorliegenden Einschnittabfolge sorgen die randseitigen Einschnitte mit - gegenüber den mittigen Einschnitten - seichteren seitlichen Einschnittabschnitten für einen gewisse Angleichung der Steifigkeiten der gebildeten Blocksegmente, welche der erwähnten Beeinträchtigung der Trockenperformance jedoch noch nicht optimal entgegenwirkt.

Der Erfindung liegt daher die Aufgabe zugrunde, bei einem Fahrzeugreifen der eingangs genannten Art den zwischen der Schnee- und Trockenperformance bestehenden Zielkonflikt auf günstigere Weise als bisher zu lösen.

Gelöst wird die gestellte Aufgabe erfindungsgemäß dadurch,
a) dass zumindest die randseitigen Einschnitte zu den Einschnittenden beabstandete, vom Einschnittgrund mitbegrenzte, freistehende Grundanhebungen aufweisen,
   wobei in jedem randseitigen Einschnitt eine größere Anzahl von freistehenden Grundanhebungen vorgesehen ist als in dem bzw. jedem mittigen Einschnitt, wobei der bzw. jeder mittige Einschnitt zumindest eine, bevorzugt genau eine oder genau zwei, freistehende Grundanhebung(en) aufweist,
   und/oder
b) dass jeder Einschnitt, im Längsschnitt betrachtet, eine Tiefenverlauflinie aufweist,
   welche bei einem Einschnitt ohne freistehende Grundanhebung vom Einschnittgrund und bei einem Einschnitt mit freistehender bzw. freistehenden Grundanhebung(en) von im Bereich außerhalb der freistehenden Grundanhebung(en) liegenden, tiefsten Grundabschnitten des Einschnittgrunds definiert ist,
   wobei die Tiefenverlauflinien der Einschnitte in Richtung Laufstreifenperipherie parallelversetzt zur Tiefenverlauflinie der Querrillen verlaufen und zu dieser jeweils einen Abstand aufweisen, wobei der Abstand der Tiefenverlauflinie jedes randseitigen Einschnitts größer ist als der Abstand der Tiefenverlauflinie des bzw. jedes mittigen Einschnitts.

Die unabhängig voneinander oder in Kombination getroffenen Maßnahmen sorgen dafür, dass die zwischen den randseitigen Einschnitten und den Querrillen liegenden, randseitigen Blocksegmente und die zwischen Einschnitten liegenden, mittleren Blocksegmente in ihrem Deformationsverhalten beim Abrollen des Reifens, vor allem unter Brems- und Traktionsbelastung, einander besonders ähnlich sind. In der Folge weisen die Blocksegmentaußenflächen der jeweils deformierten Blocksegmente relativ zum Untergrund eine ähnliche gewinkelte Orientierung auf, sodass beim Fahren auf Schnee sämtliche Block- und Einschnittkanten eines Profilblocks mit ähnlichen "Eingriffswinkel" in den Schnee eindringen, diese Kanten somit insgesamt besonders wirkungsvoll sind und die Schneeperformance des Reifens verbessert ist. Gleichzeitig wird durch das aneinander angeglichene Deformationsverhalten der Blocksegmente die Kontaktfläche der Profilblöcke zum Untergrund vergrößert und die Kraftübertragung der Blocksegmente zum Untergrund vergleichmäßigt, sodass die Trockenperformance auf höherem Niveau als bisher gehalten wird.

Das Vorsehen von zumindest einer Grundanhebung ist für die Trockenperformance günstig. Bei genau einer bzw. genau zwei Grundanhebung(en) bleibt ein für die Schneeperformance besonders günstiges Aufklappverhalten der Einschnitte erhalten.

Gemäß einer bevorzugten Ausführung, welche Merkmal b) aufweist, ist der Abstand der Tiefenverlauflinie jedes randseitigen Einschnitts 0,50 mm bis 2,00 mm, insbesondere 0,70 mm bis 1,70 mm, bevorzugt 0,80 mm bis 1,20 mm, größer ist als der Abstand der Tiefenverlauflinie des bzw. jedes mittigen Einschnitts. Dies trägt zu einer besonders vorteilhaften gegenseitigen Angleichung des Deformationsverhaltens der Blocksegmente bei.

Gemäß einer weiteren bevorzugten Ausführung, welche Merkmal b) aufweist, beträgt der Abstand der Tiefenverlauflinie des bzw. jedes mittigen Einschnitts 0,30 mm bis 1,20 mm, insbesondere bis zu 1,00 mm, bevorzugt bis zu 0,80 mm.

Bei einem Fahrzeugreifen, welcher Merkmal a) aufweist, ist es ferner günstig, wenn jeder randseitige Einschnitt genau eine oder genau zwei freistehende Grundanhebung(en) mehr als der bzw. jeder mittige Einschnitt aufweist.

Bei einem Fahrzeugreifen, welcher Merkmal a) aufweist, ist es vorteilhaft, wenn die freistehenden Grundanhebungen zur Laufstreifenperipherie in radialer Richtung einen als kleinstmöglichen Abstand ermittelten Abstand aufweisen, wobei der Abstand der freistehenden Grundanhebung(en) im bzw. in jedem mittigen Einschnitt 2,00 mm bis 4,00 mm beträgt und der Abstand der freistehenden Grundanhebung(en) in jedem randseitigen Einschnitt 1,00 mm bis 3,00 mm beträgt, wobei der Abstand der freistehenden Grundanhebung(en) im bzw. in jedem mittigen Einschnitt zumindest 0,50 mm, bevorzugt 1,00 mm bis 1,50 mm, größer ist als der Abstand der freistehenden Grundanhebung(en) in jedem randseitigen Einschnitt. Es stimmen daher die Abstände der Grundanhebungen innerhalb der mittigen Einschnitte sowie die Abstände der Grundanhebungen innerhalb der randseitigen Einschnitte jeweils überein. Die sich unterscheidenden Abstände zwischen den Grundanhebungen in dem bzw. den mittigen Einschnitt(en) und den randseitigen Einschnitten trägt zu einer besonders vorteilhaften Lösung des erwähnten Zielkonflikts bei.

Bei einem Fahrzeugreifen, welcher Merkmal a) aufweist, sind gemäß einer weiteren vorteilhaften Ausgestaltung die freistehenden Grundanhebungen in radialer Richtung jeweils durch einen parallel zur Laufstreifenperipherie verlaufenden Einschnittgrundabschnitt des Einschnittgrunds begrenzt, wobei der Einschnittgrundabschnitt, im Längsschnitt durch den Einschnitt betrachtet, eine parallel zur Laufstreifenperipherie gemessene Breite von 1,5 mm bis 3,0 mm, insbesondere von bis zu 2,5 mm, aufweist. Solche Grundanhebungen sind für die gewünschte gegenseitige Versteifung der Blocksegmente besonders günstig und tragen zu einer guten Trockenperformance bei.

Bei der letztgenannten Ausgestaltung ist gemäß einer bevorzugten Weiterentwicklung vorgesehen, dass jede freistehende Grundanhebung, im Längsschnitt durch den Einschnitt betrachtet, seitlich durch zwei langgestreckt S-förmig geschwungen verlaufende Einschnittgrundabschnitte mit je einem gerade verlaufenden, mittleren Unterabschnitt begrenzt ist, wobei die Unterabschnitte miteinander einen Winkel von 8° bis 12° einschließen und sich in Richtung Laufstreifenperipherie aneinander annähern. Dies trägt zu einer weiteren Verbesserung der gegenseitigen Versteifung der Blocksegmente bei.

Vorteilhaft ist es ferner, wenn der bzw. jeder mittige Einschnitt und die randseitigen Einschnitte, jeweils im Längsschnitt betrachtet, angrenzend an jedes Einschnittende eine randseitige Grundanhebung aufweist bzw. aufweisen, wobei jene randseitige Grundanhebung(en), welche zusätzlich an die weitere(n) Rille(n) angrenzt bzw. angrenzen, zur Laufstreifenperipherie in radialer Richtung einen als kleinstmöglichen Abstand ermittelten Abstand aufweist bzw. aufweisen, wobei der Abstand dieser randseitigen Grundanhebung(en) im bzw. in jedem mittigen Einschnitt 2,00 mm bis 4,00 mm beträgt und der Abstand dieser randseitigen Grundanhebung(en) in jedem randseitigen Einschnitt 1,00 mm bis 3,00 mm beträgt, wobei der Abstand der randseitigen Grundanhebung(en) im bzw. in jedem mittigen Einschnitt zumindest 0,50 mm, bevorzugt 1,00 mm bis 1,50 mm, größer ist als der Abstand der randseitigen Grundanhebung(en) in jedem randseitigen Einschnitt. Dies trägt zu einer weiteren gegenseitigen Anpassung des Deformationsverhaltes der Blocksegmente beim Abrollen des Reifens bei.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen vereinfachten schulterseitigen Profilblock eines in die Ebene abgewickelten Laufstreifens eins Fahrzeugreifens mit einem Ausführungsbeispiel der Erfindung,
Fig. 2a eine Frontansicht auf eine Visulisierung (einen Abzugskörper) eines Einschnitts im gemäß der Reifenaußenkontur gekrümmten Laufstreifen,
Fig. 2b eine zu Fig. 2a analoge Frontansicht des Einschnitts im in die Ebene abgewickelten Laufstreifen,
Fig. 3a eine Frontansicht auf eine Visulisierung (einen Abzugskörper) eines weiteren Einschnitts im gemäß der Reifenaußenkontur gekrümmten Laufstreifen und
Fig. 3b eine zu Fig. 3a analoge Frontansicht des weiteren Einschnitts im in die Ebene abgewickelten Laufstreifen.

Gemäß der Erfindung ausgeführte Fahrzeugreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Fahrzeugluftreifen, besonders bevorzugt Fahrzeugluftreifen in Radialbauart für Felgen mit einem ganzzahligen Felgendurchmesser von 13 Zoll bis 24 Zoll, insbesondere von 16 Zoll bis 23 Zoll, wobei die Reifen zum Fahren unter winterlichen Fahrbedingungen vorgesehen sind.

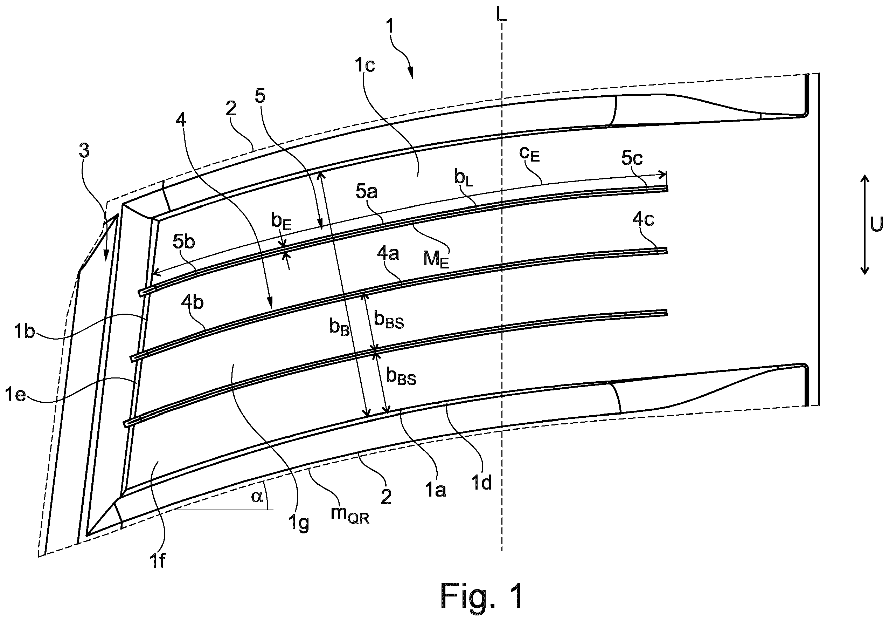

Fig. 1 zeigt eine Draufsicht auf einen in axialer Richtung langgestreckt parallelogrammförmigen, schulterseitigen Profilblock 1 eines Laufstreifens eines Fahrzeugluftreifens. Die Umfangsrichtung des Fahrzeugluftreifens ist durch einen Doppelpfeil U und der eine seitliche Rand der Bodenaufstandsfläche des Laufstreifens ist durch eine Linie L angedeutet. Die Bodenaufstandsfläche entspricht dem statisch ermittelten Footprint (ermittelt mit einem auf einer Normfelge montierten Reifen, Last bei 70% der maximalen Tragfähigkeit, Innendruck 85% des Normdrucks, gemäß ETRTO-Standards).

Der schulterseitige Profilblock 1 ist in den beiden Umfangsrichtungen durch je eine in Fig. 1 bereichsweise gezeigte Querrille 2 und laufstreifeninnenseitig durch eine Rille 3 begrenzt, wobei der schulterseitige Profilblock 1 Teil einer schulterseitigen Profilblockreihe aus über den Reifenumfang aufeinanderfolgenden, durch Querrillen 2 voneinander getrennten, schulterseitigen Profilblöcken 1 ist. Die weiteren Bereiche des Laufstreifenprofils können in an sich bekannter Weise ausgeführt sein.

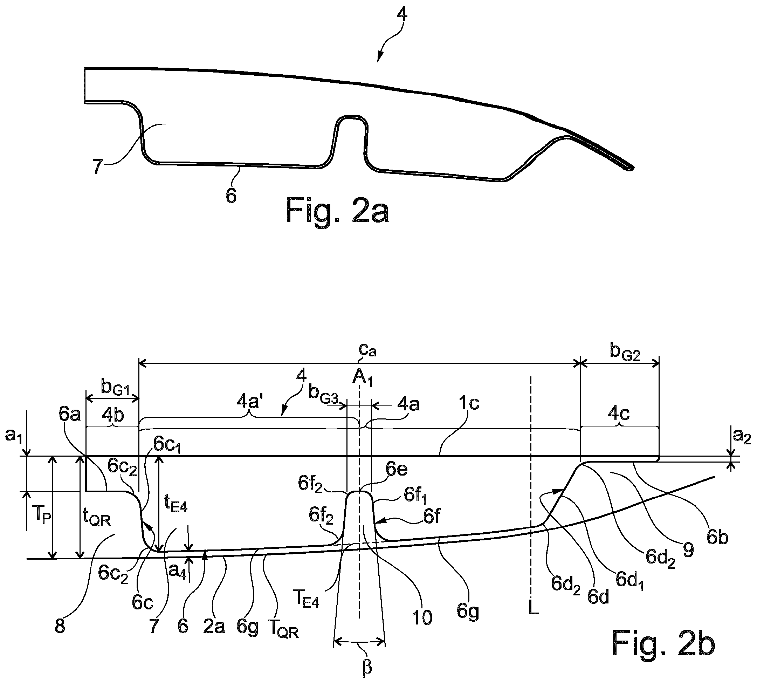

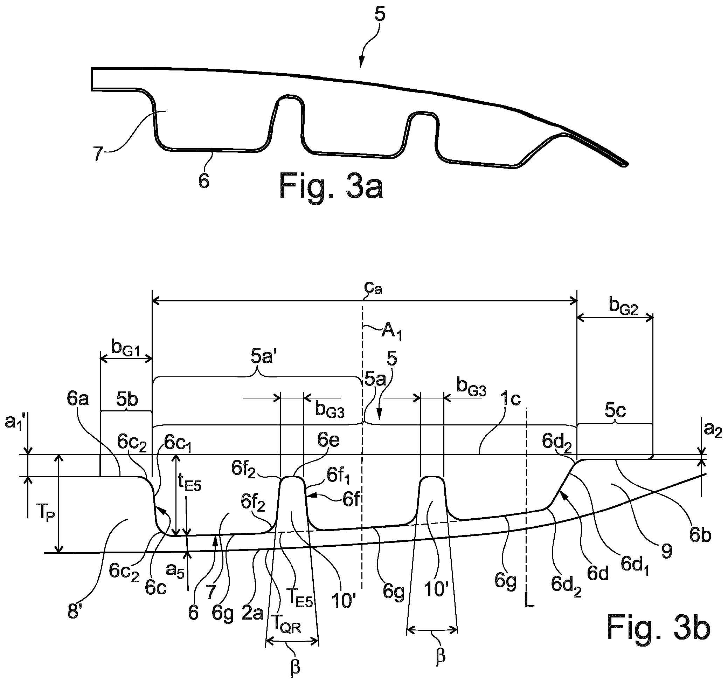

Die Querrillen 2 verlaufen, in Draufsicht betrachtet, durchgehend gebogen, parallel zueinander, weisen jeweils eine dem Rillenverlauf mittig folgende Rillenmittellinie m_{QR} auf, verlaufen - bezogen auf die Rillenmittellinie m_{QR} - zur axialen Richtung unter einem Winkel α von 0° bis 35°, insbesondere von 5° bis 25°, wobei der Winkel α in Richtung Laufstreifenaußenseite fortlaufend über die Erstreckung der Querrillen 2 abnimmt und sich jeweils auf eine lokal an die Rillenmittellinie m_{QR} angelegte Tangente bezieht. Jede Querrille 2 weist einen Rillengrund 2a (eingeblendet in Fig. 2b und Fig. 3b), an der Laufstreifenperipherie eine senkrecht zur Rillenmittellinie m_{QR}, also eine senkrecht zu einer an die jeweilige Stelle der Rillenmittellinie m_{QR} angelegten Tangente, ermittelte Breite von insbesondere 3,0 mm bis 10,0 mm, bevorzugt von 5,0 mm bis 9,0 mm, und in radialer Richtung eine maximale Tiefe t_{QR} (angedeutet in Fig. 2b, Tiefe an der tiefsten Stelle) von 70% bis 100% der jeweils vorgesehenen Profiltiefe T_{P} (Fig. 2b), die üblicherweise 6,5 mm bis 13,0 mm beträgt, auf, wobei die Querrillen 2 in Richtung Laufstreifenaußenseite in bekannter Weise seichter werden (Fig. 2b, Fig. 3b). Der Rillengrund 2a der Querrille 2 definiert bzw. bildet eine auf der jeweils lokal tiefsten Stelle der Querrille 2 liegende Tiefenverlauflinie T_{QR} (Fig. 2b, Fig. 3b) der Querrille 2.

Der schulterseitige Profilblock 1 weist an jeder Querrille 2 eine in Draufsicht durchgehend gebogen verlaufende Blockkante 1a, an der Rille 3 eine in Draufsicht gerade verlaufende seitliche Blockkante 1b, eine durch die Blockkanten 1a, 1b mitbegrenzte, in der Laufstreifenperipherie liegende Blockaußenfläche 1c, an jeder angrenzenden Querrille 2 eine an die jeweilige Blockkante 1a anschließende Blockflanke 1d und eine an der Rille 3 liegende, an die seitliche Blockkante 1b anschließende, seitliche Blockflanke 1e auf. Die Blockkanten 1a verlaufen, in Draufsicht betrachtet, parallel zueinander. Der schulterseitige Profilblock 1 weist ferner eine senkrecht zu und zwischen den Blockkanten 1a ermittelte, insbesondere konstante, maximale Blockbreite b_{B} (Breite an der breitesten Stelle) auf, wobei die maximale Blockbreite b_{B} zwischen zwei an die Blockkanten 1a angelengten, parallel zueinander verlaufenden Tangenten (nicht eingezeichnet) ermittelt ist.

Der schulterseitige Profilblock 1 ist mit drei über seine maximale Blockbreite b_{B} insbesondere gleichmäßig bzw. im Wesentlichen gleichmäßig verteilt ausgebildeten, von der Blockaußenfläche 1c ausgehenden, in Draufsicht bezüglich der Umfangsrichtung gleichsinnig zu den Blockkanten 1a geneigt verlaufenden Einschnitten 4, 5 - nämlich zwei randseitigen Einschnitten 5 und einem zwischen diesen liegenden mittigen Einschnitt 4 - versehen, wobei die Einschnitte 4, 5 den schulterseitigen Profilblock 1 zumindest innerhalb der Bodenaufstandsfläche durchqueren, daher über die seitliche Blockflanke 1e in die Rille 3 einmünden und dem schulterseitigen Profilblock 1 zwei zwischen je einer Querrille 2 und dem jeweils nächstliegenden, randseitigen Einschnitt 5 befindliche, randseitige Blocksegmente 1f und zwei je zwischen zwei mittigen Einschnitten 4 liegende, mittige Blocksegmente 1g verleihen.

Die Einschnitte 4, 5 weisen in Draufsicht jeweils eine ihrer Erstreckungsrichtung folgende, am Niveau der Blockaußenfläche 1c liegende, wendepunktfreie Einschnittbasislinie b_{L} auf, welche laufstreifeninnenseitig an der seitlichen Blockkante 1b endet.

Die Einschnitte 4, 5 verlaufen - in Draufsicht betrachtet und bezogen auf ihre Einschnittbasislinien b_{L} - parallel zueinander und setzen sich, ebenfalls in Draufsicht betrachtet, entlang der Einschnittbasislinien b_{L} jeweils aus einem durchgehend gebogen sowie parallel zu den Blockkanten 1a verlaufenden, zentralen Einschnittabschnitt 4a (Einschnitt 4), 5a (Einschnitt 5), einem tangential (knickfrei) an diesen anschließenden, zur Rille 3 sowie gerade verlaufenden, innenseitigen Einschnittabschnitt 4b (Einschnitt 4), 5b (Einschnitt 5) und einem tangential an den zentralen Einschnittabschnitt 4a, 5a anschließenden, schulterseitigen Einschnittabschnitt 4c, 5c zusammen, wobei die zentralen Einschnittabschnitte 4a, 5a, bezogen auf die Einschnittbasislinien b_{L}, jeweils parallel zu den Blockkanten 1a verlaufen.

Die randseitigen Blocksegmente 1f und die mittigen Blocksegmente 1g weisen jeweils eine am Niveau der Blockaußenfläche 1c ermittelte, auf die Einschnittbasislinie(n) b_{L} bezogene, insbesondere konstante, maximale Segmentbreite b_{BS} (Breite an der breitesten Stelle) auf, wobei die erwähnte gleichmäßige bzw. im Wesentlichen gleichmäßige Verteilung der Einschnitte 4, 5 über die maximale Blockbreite b_{B} derart ist, dass die Segmentbreiten b_{BS} der Blocksegmente 1f, 1g übereinstimmen oder innerhalb eines Intervalls von 0,5 mm, insbesondere von 0,2 mm, schwanken. Besonders bevorzugt ist die Anzahl der Einschnitte 4, 5 derart auf die maximale Blockbreite b_{B} abgestimmt, dass die maximale Segmentbreite b_{BS} jeweils 4,0 mm bis 7,0 mm beträgt. Bei den randseitigen Blocksegmenten 1f bezieht sich die maximale Segmentbreite b_{BS} auf die jeweilige Blockkante 1a.

Gemäß Fig. 2b und Fig. 3b sind die Einschnitte 4, 5 jeweils durch einen Einschnittgrund 6 und zwei parallel zueinander sowie in radialer Richtung ausgerichtete Einschnittwände 7 begrenzt (je eine Einschnittwand 7 zu sehen). Die Einschnitte 4, 5 weisen jeweils eine entlang der Einschnittbasislinie b_{L} ermittelte Erstreckungslänge c_{E} (Fig. 1), in radialer Richtung eine maximale Tiefe t_{E4} (Einschnitt 4, Tiefe an der tiefsten Stelle, Fig. 2b), t_{E5} (Einschnitt 5, Tiefe an der tiefsten Stelle, Fig. 3b) von zumindest 60%, insbesondere von zumindest 70%, der Profiltiefe T_{P}, eine zwischen den Einschnittwänden 7 als kleinstmöglichen Abstand ermittelte, konstante Breite b_{E} (Fig. 1) von 0,40 mm bis 2,00 mm, insbesondere von 0,60 mm bis 1,40 mm, sowie eine zu den Einschnittwänden 7 übereinstimmend beabstandete, in Draufsicht dem Einschnittverlauf folgende Einschnittmittelfläche M_{E} auf (Fig. 1: Die Einschnittmittelfläche M_{E} fällt beim Ausführungsbeispiel in Draufsicht mit der Einschnittbasislinie b_{L} zusammen). Die maximale Tiefe t_{E4} (Fig. 2b) des mittigen Einschnitts 4 unterscheidet sich beim Ausführungsbeispiel von der maximalen Tiefe t_{E5} (Fig. 3b) der randseitigen Einschnitte 5, wie noch genauer erläutert wird.

In jedem innenseitigen Einschnittabschnitt 4b (Einschnitt 4), 5b (Einschnitt 5) ist jeweils eine an beide Einschnittwände 7 angebundene, bis zur Rille 3 (Fig. 1) reichende, daher an das jeweilige Einschnittende angrenzende, geringfügig in den zentralen Einschnittabschnitt 4a (Einschnitt 4), 5a (Einschnitt 5) hineinragende, vom Einschnittgrund 6 mitbegrenzte, randseitige Grundanhebung 8 (Einschnittabschnitt 4b), 8' (Einschnittabschnitt 5b) ausgebildet. In jedem schulterseitigen Einschnittabschnitt 4c, 5c ist jeweils eine an beide Einschnittwände 7 angebundene, geringfügig in den zentralen Einschnittabschnitt 4a (Einschnitt 4), 5a (Einschnitt 5) hineinragende, vom Einschnittgrund 6 mitbegrenzte, randseitige Grundanhebung 9 ausgebildet.

Die randseitige Grundanhebung 8, 8', 9 weist, im entlang der Einschnittmittelfläche M_{E} verlaufenden Längsschnitt betrachtet, eine asymmetrische Trapezform auf, ist in radialer Richtung durch einen parallel zur Blockaußenfläche 1c verlaufende, die kürzere Grundseite des Trapezes bildenden Einschnittgrundabschnitt 6a (Grundanhebung 8, 8'), 6b (Grundanhebung 9) und einschnittinnenseitig durch einen einen Trapezschenkel bildenden, langgestreckt S-förmig geschwungen verlaufenden Einschnittgrundabschnitt 6c (Grundanhebung 8, 8'), 6d (Grundanhebung 9) begrenzt. Der Einschnittgrundabschnitt 6c, 6d setzt sich aus einem gerade verlaufenden, mittleren Unterabschnitt 6c₁, 6d₁ und zwei insbesondere jeweils entlang eines Radius gebogen verlaufenden, endseitigen Unterabschnitten 6c₂, 6d₂ zusammen.

Die randseitige Grundanhebung 8, 8' weist am Niveau des Einschnittgrundabschnitts 6a eine parallel zur Laufstreifenperipherie gemessene Breite b_{G1} von 3,0 mm bis 6,0 mm auf, wobei der die randseitige Grundanhebung 8 mitbegrenzende Einschnittgrundabschnitt 6a zum Niveau der Blockaußenfläche 1c in radialer Richtung einen Abstand a₁ (Fig. 2b) von 2,00 mm bis 4,00 mm und der die randseitige Grundanhebung 8' mitbegrenzende Einschnittgrundabschnitt 6a zum Niveau der Blockaußenfläche 1c in radialer Richtung einen Abstand a₁' (Fig. 3b) von 1,00 mm bis 3,00 mm aufweist, wobei der Abstand a₁ zumindest 0,50 mm, bevorzugt 1,00 mm bis 1,50 mm, größer ist als der Abstand a₁'.

Die randseitige Grundanhebung 9 weist am Niveau des Einschnittgrundabschnitts 6b eine parallel zur Laufstreifenperipherie gemessene Breite b_{G2} von 3,50 mm bis 6,50 mm auf, wobei der Einschnittgrundabschnitt 6b zum Niveau der Blockaußenfläche 1c in radialer Richtung einen Abstand a₂ von 0,30 mm bis 1,00 mm aufweist.

Der zentrale Einschnittabschnitt 4a, 5a weist eine entlang der Einschnittbasislinie b_{L} (Fig. 1) ermittelte Länge cₐ (Fig. 2b, Fig. 3b) auf und setzt sich aus zwei Abschnitthälften 4a', 5a' zusammen, welche an einer in radialer Richtung verlaufenden, den zentralen Einschnittabschnitt 4a, 5a bezüglich seiner Länge cₐ halbierenden Achse A₁ aneinander anschließen.

Im zentralen Einschnittabschnitt 4a (Fig. 2b) ist eine einzige an beide Einschnittwände 7 angebundene, vom Einschnittgrund 6 mitbegrenzte, freistehende Grundanhebung 10 ausgebildet, welche von der Achse A₁ im Wesentlichen halbiert ist und sich daher teilweise in jeder Abschnitthälfte 4a' befindet. Im zentralen Einschnittabschnitt 5a (Fig. 3b) sind zwei an beide Einschnittwände 7 angebundene, vom Einschnittgrund 6 mitbegrenzte, freistehende Grundanhebungen 10' ausgebildet, wobei sich die eine Grundanhebung 10' komplett in der einen Abschnitthälfte 5a' und die andere Grundanhebung 10' komplett in der anderen Abschnitthälfte 5a' befindet.

Die bzw. jede freistehende Grundanhebung 10, 10' weist, im entlang der Einschnittmittelfläche M_{E} verlaufenden Längsschnitt betrachtet, unter Vernachlässigung der sich zur Laufstreifenaußenseite verringernden Tiefe des Einschnitts 4, 5 eine symmetrische Trapezform mit einer am Einschnittgrund 6 liegenden Trapezbasis auf, ist in radialer Richtung durch eine parallel zur Blockaußenfläche 1c verlaufende, die kürze Grundseite des Trapezes bildenden Einschnittgrundabschnitt 6e und seitlich durch zwei die Trapezschenkel bildende, langgestreckt S-förmig geschwungen verlaufende Einschnittgrundabschnitte 6f begrenzt. Die Einschnittgrundabschnitte 6f setzen sich jeweils aus einem gerade verlaufenden, mittleren Unterabschnitt 6f₁ und zwei insbesondere jeweils entlang eines Radius gebogen verlaufenden, endseitigen Unterabschnitten 6f₂ zusammen. Die mittleren Unterabschnitte 6f₁ schließen miteinander einen Winkel β von 8° bis 12° ein und sind derart zur radialen Richtung geneigt, dass sie sich in Richtung Laufstreifenperipherie aneinander annähern.

Die freistehende Grundanhebung 10, 10' weist, im entlang der Einschnittmittelfläche M_{E} verlaufenden Längsschnitt betrachtet, am Niveau des Einschnittgrundabschnitts 6e eine parallel zur Laufstreifenperipherie gemessene Breite b_{G3} von 1,5 mm bis 3,0 mm, insbesondere von bis zu 2,5 mm, auf, wobei der die freistehende Grundanhebung 10, 10' mitbegrenzende Einschnittgrundabschnitt 6e - übereinstimmend zum Einschnittgrundabschnitt 6a auf der Grundanhebung 8, 8' - zum Niveau der Blockaußenfläche 1c in radialer Richtung den Abstand a₁ (Grundanhebung 10), a₁' (Grundanhebung 10') aufweist.

Bei der Ermittlung der erwähnten Breiten b_{G1}, b_{G2}, b_{G3} der Grundanhebungen 8, 8', 9, 10, 10' bleiben die jeweils an den parallel zur Laufstreifenperipherie verlaufenden Einschnittgrundabschnitt 6a, 6b, 6e unmittelbar anschließenden, radial äußeren endseitigen Unterabschnitte 6c₂, 6d₂, 6f₂ derart unberücksichtigt, sodass sich die Breiten b_{G1}, b_{G2}, b_{G3} auf einen fiktiven Schnittpunkt der mittleren Unterabschnitte 6c₁, 6d₁, 6f₁ mit den parallel zur Laufstreifenperipherie verlaufenden Einschnittgrundabschnitten 6a, 6b, 6e beziehen.

Im Bereich außerhalb der Grundanhebungen 8, 8', 9, 10, 10' verbleiben vom Einschnittgrund 6 tiefste Grundabschnitte 6g, welche zwischen den radial inneren Enden der beiden jeweiligen langgestreckt S-förmig geschwungen verlaufenden Einschnittgrundabschnitte 6c, 6d, 6f verlaufen. Die tiefsten Grundabschnitte 6g verlaufen, im entlang der Einschnittmittelfläche M_{E} verlaufenden Längsschnitt betrachtet, fluchtend miteinander und definieren bzw. bilden miteinander je eine Tiefenverlauflinie T_{E4} (Einschnitt 4, strichliert angedeutet), T_{E5} (Einschnitt 5, strichliert angedeutet) des Einschnitts 4, 5. Die Tiefenverlauflinien T_{E4}, T_{E5} der Einschnitte 4, 5 und die Tiefenverlauflinien T_{QR} der angrenzenden Querrillen 2 verlaufen - betrachtet in einer in radialer Richtung verlaufenden Fläche, in welche die Tiefenverlauflinien T_{E4}, T_{E5}, T_{QR} in Umfangsrichtung hineinprojiziert sind - parallel zueinander, wobei die Tiefenverlauflinien T_{E4}, T_{E5} der Einschnitte 4, 5 gegenüber der Tiefenverlauflinie T_{QR} jeder nächstliegenden Querrille 2 in Richtung Laufstreifenperipherie derart parallelversetzt sind, dass die Tiefenverlauflinie T_{E4} zur Tiefenverlauflinie T_{QR} einen als kleinstmöglichen Abstand ermittelten Abstand a₄ (Fig. 2b) und die Tiefenverlauflinie T_{E5} zur Tiefenverlauflinie T_{QR} einen als kleinstmöglichen Abstand ermittelten Abstand a₅ (Fig. 3b) aufweist, wobei der Abstand a₅ größer ist als der Abstand a₄. Der Abstand a₄ beträgt 0,30 mm bis 1,20 mm, insbesondere bis zu 1,00 mm, bevorzugt bis zu 0,80 mm. Der Abstand a₅ ist 0,50 mm bis 2,00 mm, insbesondere 0,70 mm bis 1,70 mm, bevorzugt 0,80 mm bis 1,20 mm, größer als der Abstand a₄. Folglich ist die maximale Tiefe t_{E5} (Fig. 3b) der randseitigen Einschnitte 5 jeweils um die zwischen dem Abstand a₄ und dem Abstand a₅ vorliegende Differenz geringer als die maximale Tiefe t_{E4} des mittigen Einschnitts 4.

Die Erfindung ist auf das beschriebene Ausführungsbeispiel nicht beschränkt.

Die Einschnitte können auch in Profilblöcken einer mittleren Profilblockreihe vorgesehen sein. Ferner können die Einschnitte in Draufischt gerade oder durchgehend gebogen sowie jeweils zusätzlich zumindest abschnittsweise beliebig gewellt verlaufen. Die Einschnittbasisilinie verläuft, in Draufischt betrachtet, jeweils in Erstreckungsrichtung (Hautperstreckungsrichtung) der Einschnitte und daher entweder gerade oder durchgehend gebogen (bogenförmig, kreisbogenförmig) sowie bezüglich der Umfangsrichtung gleichsinnig geneigt zu den an den Querrillen liegenden Blockkanten.

Gemäß einer ersten Ausführungsvariante ist in jedem randseitigen Einschnitt jeweils zumindest eine freistehende Grundanhebung vorgesehen, wobei die Anzahl von freistehenden Grundanhebungen in jedem randseitigen Einschnitt größer ist als in dem bzw. jedem mittigen Einschnitt.

Gemäß einer zweiten Ausführungsvariante, welche entweder alternativ zur ersten Ausführungsvariante oder gemeinsam mit der ersten Ausführungsvariante vorgesehen ist, weisen die Einschnitte, im Längsschnitt betrachtet, eine Tiefenverlauflinie auf, welche auf die erläuterte Weise zur Tiefenverlauflinie der Querrillen parallel versetzt ist. Bei einem Einschnitt ohne freistehende Grundanhebung ist die Tiefenverlauflinie durch den Einschnittgrund definiert.

### Bezugszeichenliste

- 1: schulterseitiger Profilblock
- 1a: Blockkante
- 1b: seitliche Blockkante
- 1c: Blockaußenfläche
- 1d: Blockflanke
- 1e: seitliche Blockflanke
- 1f: randseitiges Blocksegment
- 1g: mittiges Blocksegment
- 2: Querrille
- 2a: Rillengrund
- 3: Rille
- 4: mittiger Einschnitt
- 4a: zentraler Einschnittabschnitt
- 4a': Abschnitthälfte
- 4b: innenseitiger Einschnittabschnitt
- 4c: schulterseitiger Einschnittabschnitt
- 5: randseitiger Einschnitt
- 5a: zentraler Einschnittabschnitt
- 5a': Abschnitthälfte
- 5b: innenseitiger Einschnittabschnitt
- 5c: schulterseitiger Einschnittabschnitt
- 6: Einschnittgrund
- 6a: Einschnittgrundabschnitt
- 6b: Einschnittgrundabschnitt
- 6c: Einschnittgrundabschnitt
- 6c₁: mittlerer Unterabschnitt
- 6c₂: endseitiger Unterabschnitt
- 6d: Einschnittgrundabschnitt
- 6d₁: mittlerer Unterabschnitt
- 6d₂: endseitiger Unterabschnitt
- 6e: Einschnittgrundabschnitt
- 6f: Einschnittgrundabschnitt
- 6f₁: mittlerer Unterabschnitt
- 6f₂: endseitiger Unterabschnitt
- 6g: tiefster Grundabschnitt
- 7: Einschnittwand
- 8, 8': randseitige Grundanhebung
- 9: randseitige Grundanhebung
- 10, 10': freistehende Grundanhebung
- a₁, a₁', a₂, a₄, a₅: Abstand
- A₁: Achse
- b_{B}: maximale Blockbreite
- b_{BS}: maximale Segmentbreite
- b_{E}, b_{G1}, b_{G2}, b_{G}: Breite
- b_{L}: Einschnittbasislinie
- cₐ: Länge
- c_{E}: Erstreckungslänge
- M_{E}: Einschnittmittelfläche
- m_{QR}: Rillenmittellinie
- t_{E4}, t_{E5}: maximale Tiefe
- T_{E4}, T_{E5}: Tiefenverlauflinie
- T_{P}: Profiltiefe
- t_{QR}: maximale Tiefe
- T_{QR}: Tiefenverlauflinie
- U: Doppelpfeil (Umfangsrichtung)
- L: Linie (seitlicher Rand der Bodenaufstandsfläche)
- α, β: Winkel

## Patentansprüche

1. Fahrzeugreifen mit einem Laufstreifen mit zumindest einer Profilblockreihe mit in Umfangsrichtung aufeinanderfolgenden Profilblöcken (1), welche durch parallel zueinander verlaufende Querrillen (2) und an zumindest einer Seite - entweder gemeinsam oder jeweils - von einer weiteren Rille (3) begrenzt sind und an den Querrillen (2) Blockkanten (1a) aufweisen,
wobei die Querrillen (2) je einem Rillengrund (2a) und, im Längsschnitt betrachtet, eine durch die tiefsten Stellen des Rillengrunds (2a) definierte Tiefenverlauflinie (T_{QR}) aufweisen,
wobei zu den Profilblöcken (1) solche gehören, welche mit zumindest drei in Umfangsrichtung aufeinanderfolgenden Einschnitten (4, 5) versehen, insbesondere durchquert, sind, wobei die Einschnitte (4, 5) in die weitere bzw. die an den Profilblock (1) jeweils angrenzende weitere Rille (3) einmünden, in Draufsicht betrachtet und bezogen auf in ihrer Erstreckungsrichtung ausgerichtete Einschnittbasislinien (b_{L}), bezüglich der Umfangsrichtung gleichsinnig geneigt, insbesondere parallel, zu den Blockkanten (1a) verlaufen und einen Einschnittgrund (6), eine Breite (b_{E}) von 0,40 mm bis 2,00 mm und eine maximale Tiefe (t_{E4}, t_{E5}) von zumindest 60% der Profiltiefe (T_{P}) aufweisen, wobei zu den Einschnitten (4, 5) zwei übereinstimmend ausgeführte randseitige Einschnitte (5) und ein einziger mittiger Einschnitt (4) oder mehrere übereinstimmend ausgeführte mittige Einschnitte (4) gehören, wobei sich der bzw. jeder mittige Einschnitt (4) von den randseitigen Einschnitten (5) im Hinblick auf seinen Tiefenverlauf unterscheidet,
a) wobei die randseitigen Einschnitte (5) zu den Einschnittenden beabstandete, vom Einschnittgrund (6) mitbegrenzte, freistehende Grundanhebungen (10, 10') aufweisen,
wobei in jedem randseitigen Einschnitt (5) eine größere Anzahl von freistehenden Grundanhebungen (10, 10') vorgesehen ist als in dem bzw. jedem mittigen Einschnitt (4),
wobei der bzw. jeder mittige Einschnitt (4) zumindest eine, bevorzugt genau eine oder genau zwei, freistehende Grundanhebung(en) (10) aufweist, und/oder
b) wobei jeder Einschnitt (4, 5), im Längsschnitt betrachtet, eine Tiefenverlauflinie (T_{E4}, T_{E5}) aufweist,
welche bei einem Einschnitt ohne freistehende Grundanhebung vom Einschnittgrund (6) und bei einem Einschnitt (4, 5) mit freistehender bzw. freistehenden Grundanhebung(en) (10) von im Bereich außerhalb der freistehenden Grundanhebung(en) (10) liegenden, tiefsten Grundabschnitten (6g) des Einschnittgrunds (6g) definiert ist,
wobei die Tiefenverlauflinien (T_{E4}, T_{E5}) der Einschnitte (4, 5) in Richtung Laufstreifenperipherie parallelversetzt zur Tiefenverlauflinie (T_{QR}) der Querrillen (2) verlaufen und zu dieser jeweils einen Abstand (a₄, as) aufweisen, wobei der Abstand (a₅) der Tiefenverlauflinie (T_{E5}) jedes randseitigen Einschnitts (5) größer ist als der Abstand (a₄) der Tiefenverlauflinie (T_{E4}) des bzw. jedes mittigen Einschnitts (4).

2. Fahrzeugreifen nach Anspruch 1, welcher Merkmal b) aufweist, **dadurch gekennzeichnet, dass** der Abstand (a₅) der Tiefenverlauflinie (T_{E5}) jedes randseitigen Einschnitts (5) 0,50 mm bis 2,00 mm, insbesondere 0,70 mm bis 1,70 mm, bevorzugt 0,80 mm bis 1,20 mm, größer ist als der Abstand (a₄) der Tiefenverlauflinie (T_{E4}) des bzw. jedes mittigen Einschnitts (4).

3. Fahrzeugreifen nach Anspruch 1 oder 2, welcher Merkmal b) aufweist, **dadurch gekennzeichnet, dass** der Abstand (a₄) der Tiefenverlauflinie (T_{E4}) des bzw. jedes mittigen Einschnitts (4) 0,30 mm bis 1,20 mm, insbesondere bis zu 1,00 mm, bevorzugt bis zu 0,80 mm beträgt.

4. Fahrzeugreifen nach einem der Ansprüche 1 bis 3, welcher Merkmal a) aufweist, **dadurch gekennzeichnet, dass** jeder randseitige Einschnitt (5) genau eine oder genau zwei freistehende Grundanhebung(en) (10') mehr als der bzw. jeder mittige Einschnitt (4) aufweist.

5. Fahrzeugreifen nach Anspruch 1 oder 4, welcher Merkmal a) aufweist, **dadurch gekennzeichnet, dass** die freistehenden Grundanhebungen (10, 10') zur Laufstreifenperipherie in radialer Richtung einen als kleinstmöglichen Abstand ermittelten Abstand (a₁, a₁') aufweisen, wobei der Abstand (a₁) der freistehenden Grundanhebung(en) (10) im bzw. in jedem mittigen Einschnitt (4) 2,00 mm bis 4,00 mm beträgt und der Abstand (a₁') der freistehenden Grundanhebung(en) (10') in jedem randseitigen Einschnitt (5) 1,00 mm bis 3,00 mm beträgt, wobei der Abstand (a₁) der freistehenden Grundanhebung(en) (10) im bzw. in jedem mittigen Einschnitt (4) zumindest 0,50 mm, bevorzugt 1,00 mm bis 1,50 mm, größer ist als der Abstand (a₁') der freistehenden Grundanhebung(en) (10') in jedem randseitigen Einschnitt (5).

6. Fahrzeugreifen nach einem der Ansprüche 1 bis 5, welcher Merkmal a) aufweist, **dadurch gekennzeichnet, dass** die freistehenden Grundanhebungen (10, 10') in radialer Richtung jeweils durch einen parallel zur Laufstreifenperipherie verlaufenden Einschnittgrundabschnitt (6e) des Einschnittgrunds (6) begrenzt sind, wobei der Einschnittgrundabschnitt (6e), im Längsschnitt durch den Einschnitt (4, 5) betrachtet, eine parallel zur Laufstreifenperipherie gemessene Breite (b_{G3}) von 1,5 mm bis 3,0 mm, insbesondere von bis zu 2,5 mm, aufweist.

7. Fahrzeugreifen nach Anspruch 6, **dadurch gekennzeichnet, dass** jede freistehende Grundanhebung (10, 10'), im Längsschnitt durch den Einschnitt (4, 5) betrachtet, seitlich durch zwei langgestreckt S-förmig geschwungen verlaufende Einschnittgrundabschnitte (6f) mit je einem gerade verlaufenden, mittleren Unterabschnitt (6f') begrenzt ist, wobei die Unterabschnitte (6f') miteinander einen Winkel (β) von 8° bis 12° einschließen und sich in Richtung Laufstreifenperipherie aneinander annähern.

8. Fahrzeugreifen nach einem der Ansprüche 1 bis 7, **dadurch gekennzeichnet, dass** der bzw. jeder mittige Einschnitt (4) und die randseitigen Einschnitte (5), jeweils im Längsschnitt betrachtet, angrenzend an jedes Einschnittende eine randseitige Grundanhebung (8, 8', 9, 9') aufweist bzw. aufweisen, wobei jene randseitige Grundanhebung(en) (8, 8'), welche zusätzlich an die weitere(n) Rille(n) (3) angrenzt bzw. angrenzen, zur Laufstreifenperipherie in radialer Richtung einen als kleinstmöglichen Abstand ermittelten Abstand (a₁, a₁') aufweist bzw. aufweisen, wobei der Abstand (a₁) dieser randseitigen Grundanhebung(en) (8) im bzw. in jedem mittigen Einschnitt (4) 2,00 mm bis 4,00 mm beträgt und der Abstand (a₁') dieser randseitigen Grundanhebung(en) (8') in jedem randseitigen Einschnitt (5) 1,00 mm bis 3,00 mm beträgt, wobei der Abstand (a₁) der randseitigen Grundanhebung(en) (8) im bzw. in jedem mittigen Einschnitt (4) zumindest 0,50 mm, bevorzugt 1,00 mm bis 1,50 mm, größer ist als der Abstand (a₁') der randseitigen Grundanhebung(en) (8') in jedem randseitigen Einschnitt (5).

## Claims

1. Vehicle tyre comprising a tread having at least one row of profile blocks with circumferentially successive profile blocks (1), which are delimited by transverse grooves (2) running parallel to one another and are delimited on at least one side - either together or in each case - by a further groove (3) and have block edges (1a) at the transverse grooves (2),
wherein the transverse grooves (2) each have a groove base (2a) and, when seen in longitudinal section, a depth profile line (T_{QR}) defined by the deepest points of the groove base (2a),
wherein the profile blocks (1) include ones which are provided with, in particular traversed by, at least three circumferentially successive sipes (4, 5), wherein the sipes (4, 5) open out into the further groove (3), or the further groove (3) that respectively adjoins the profile block (1), when seen in plan view and in relation to sipe base lines (b_{L}) aligned in their direction of extent, run such that they are inclined in the same direction with respect to the circumferential direction, in particular parallel, with respect to the block edges (1a) and have a sipe base (6), a width (b_{E}) of 0.40 mm to 2.00 mm and a maximum depth (t_{E4}, t_{E5}) of at least 60% of the profile depth (T_{P}), wherein the sipes (4, 5) include two matching peripheral sipes (5) and a single central sipe (4) or a number of matching central sipes (4), wherein the or each central sipe (4) differs from the peripheral sipes (5) in terms of its depth profile,
a) wherein the peripheral sipes (5) have free-standing base elevations (10, 10') which are at a distance from the sipe ends and are partly delimited by the sipe base (6),
wherein a greater number of free-standing base elevations (10, 10') are provided in each peripheral sipe (5) than in the or each central sipe (4),
wherein the or each central sipe (4) has at least one, preferably exactly one or exactly two, free-standing base elevation(s) (10), and/or
b) wherein, when seen in longitudinal section, each sipe (4, 5) has a depth profile line (T_{E4}, T_{E5}),
which in the case of a sipe without a free-standing base elevation is defined by the sipe base (6) and in the case of a sipe (4, 5) with a free-standing base elevation or base elevations (10) is defined by deepest base portions (6g) of the sipe base (6g) lying in the region outside the free-standing base elevation(s) (10),
wherein the depth profile lines (T_{E4}, T_{E5}) of the sipes (4, 5) run in the direction of the periphery of the tread in a manner offset parallel to the depth profile line (T_{QR}) of the transverse grooves (2) and are in each case at a distance (a₄, a₅) therefrom, wherein the distance (a₅) of the depth profile line (T_{E5}) of each peripheral sipe (5) is greater than the distance (a₄) of the depth profile line (T_{E4}) of the or each central sipe (4).

2. Vehicle tyre according to Claim 1, which has feature b), **characterized in that** the distance (a₅) of the depth profile line (T_{E5}) of each peripheral sipe (5) is 0.50 mm to 2.00 mm, in particular 0.70 mm to 1.70 mm, preferably 0.80 mm to 1.20 mm, greater than the distance (a₄) of the depth profile line (T_{E4}) of the or each central sipe (4).

3. Vehicle tyre according to Claim 1 or 2, which has feature b), **characterized in that in that** the distance (a₄) of the depth profile line (T_{E4}) of the or each central sipe (4) is 0.30 mm to 1.20 mm, in particular up to 1.00 mm, preferably up to 0.80 mm.

4. Vehicle tyre according to one of Claims 1 to 3, which has feature a), **characterized in that** each peripheral sipe (5) has exactly one or exactly two free-standing base elevation(s) (10') more than the or each central sipe (4).

5. Vehicle tyre according to Claim 1 or 4, which has feature a), **characterized in that** the free-standing base elevations (10, 10') are at a distance (a₁, a₁') from the periphery of the tread in the radial direction determined as the smallest possible distance, wherein the distance (a₁) of the free-standing base elevation(s) (10) in the or in each central sipe (4) is 2.00 mm to 4.00 mm and the distance (a₁') of the free-standing base elevation(s) (10') in each peripheral sipe (5) is 1.00 mm to 3.00 mm, wherein the distance (a₁) of the free-standing base elevation(s) (10) in the or in each central sipe (4) is at least 0.50 mm, preferably 1.00 mm to 1.50 mm, greater than the distance (a₁') of the free-standing base elevation(s) (10') in each peripheral sipe (5).

6. Vehicle tyre according to one of Claims 1 to 5, which has feature a), **characterized in that** the free-standing base elevations (10, 10') are delimited in the radial direction in each case by a sipe base portion (6e) of the sipe base (6) running parallel to the periphery of the tread, wherein, when seen in longitudinal section through the sipe (4, 5), the sipe base portion (6e) has a width (b_{G3}), measured parallel to the periphery of the tread, of 1.5 mm to 3.0 mm, in particular of up to 2.5 mm.

7. Vehicle tyre according to Claim 6, **characterized in that**, when seen in longitudinal section through the sipe (4, 5), each free-standing base elevation (10, 10') is delimited laterally by two sipe base portions (6f) running in an elongate S-shaped curved manner and each having a straight-running central lower portion (6f'), wherein the lower portions (6f') enclose an angle (β) of 8° to 12° with one another and approach one another in the direction of the periphery of the tread.

8. Vehicle tyre according to one of Claims 1 to 7, **characterized in that**, when respectively seen in longitudinal section, the or each central sipe (4) and the peripheral sipes (5), has or have a peripheral base elevation (8, 8', 9, 9') adjacent to each sipe end, wherein that/those peripheral base elevation(s) (8, 8') which additionally adjoins or adjoin the further groove(s) (3) is or are at a distance (a₁, a₁') from the periphery of the tread in the radial direction determined as the smallest possible distance, wherein the distance (a₁) of this/these peripheral base elevation(s) (8) in the or in each central sipe (4) is 2.00 mm to 4.00 mm and the distance (a₁') of this/these peripheral base elevation(s) (8') in each peripheral sipe (5) is 1.00 mm to 3.00 mm, wherein the distance (a₁) of the peripheral base elevation(s) (8) in the or in each central sipe (4) is at least 0.50 mm, preferably 1.00 mm to 1.50 mm, greater than the distance (a₁') of the peripheral base elevation(s) (8') in each peripheral sipe (5).

## Revendications

1. Pneumatique de véhicule comprenant une bande de roulement présentant au moins une rangée de blocs de profil comportant des blocs de profil (1) successifs dans la direction circonférentielle, lesquels sont délimités par des rainures transversales (2) s'étendant parallèlement les unes aux autres et, sur au moins un côté - soit conjointement, soit respectivement - par une autre rainure (3), et présentent, au niveau des rainures transversales (2), des arêtes de bloc (1a),
dans lequel les rainures transversales (2) présentent chacune un fond de rainure (2a) et, considérées en coupe longitudinale, une ligne de profil de profondeur (T_{QR}) définie par les points les plus profonds du fond de rainure (2a),
dans lequel les blocs de profil (1) comprennent des blocs qui sont pourvus d'au moins trois incisions (4, 5) successives dans la direction circonférentielle, notamment traversés par celles-ci, les incisions (4, 5) débouchant dans l'autre rainure ou dans l'autre rainure adjacente au bloc de profil (1), respectivement (3), s'étendant, en vue de dessus et par rapport à des lignes de base d'incision (b_{L}) orientées dans leur direction d'extension, inclinées dans le même sens par rapport à la direction circonférentielle, notamment parallèlement, aux arêtes de bloc (1a), et présentant un fond d'incision (6), une largeur (b_{E}) de 0,40 mm à 2,00 mm et une profondeur maximale (t_{E4}, t_{E5}) d'au moins 60% de la profondeur de profil (T_{P}), les incisions (4, 5) comprenant deux incisions latérales (5) réalisées de manière identique et une seule incision centrale (4) ou plusieurs incisions centrales (4) réalisées de manière identique, la ou chaque incision centrale (4) se distinguant des incisions latérales (5) en ce qui concerne son profil de profondeur,
a) dans lequel les incisions latérales (5) présentent, à distance des extrémités des incisions, des surélévations de fond (10, 10') libres, délimitées également par le fond d'incision (6),
dans lequel un plus grand nombre de surélévations de fond (10, 10') libres est prévu dans chaque incision latérale (5) que dans la ou chaque incision centrale (4),
dans lequel la ou chaque incision centrale (4) présente au moins une, de préférence exactement une ou exactement deux, surélévation(s) de fond (10) libre(s), et/ou
b) dans lequel chaque incision (4, 5), considérée en coupe longitudinale, présente une ligne de profil de profondeur (T_{E4}, T_{E5}),
laquelle est définie, dans le cas d'une incision sans surélévation de fond libre, par le fond d'incision (6) et, dans le cas d'une incision (4, 5) avec une ou plusieurs surélévation(s) de fond libre(s) (10), par les sections de fond les plus profondes (6g) du fond d'incision (6g), situées dans une zone en dehors de la ou des surélévation(s) de fond libre(s) (10),
dans lequel les lignes de profil de profondeur (T_{E4}, T_{E5}) des incisions (4, 5) s'étendent, en direction de la périphérie de la bande de roulement, parallèlement et avec un décalage par rapport à la ligne de profil de profondeur (T_{QR}) des rainures transversales (2), et présentent chacune par rapport à celle-ci un écart (a₄, a₅), l'écart (a₅) de la ligne de profil de profondeur (T_{E5}) de chaque incision latérale (5) étant supérieur à l'écart (a₄) de la ligne de profil de profondeur (T_{E4}) de la ou de chaque incision centrale (4).

2. Pneumatique de véhicule selon la revendication 1, présentant la caractéristique b), **caractérisé en ce que** l'écart (a₅) de la ligne de profil de profondeur (T_{E5}) de chaque incision latérale (5) est supérieur de 0,50 mm à 2,00 mm, notamment de 0,70 mm à 1,70 mm, de préférence de 0,80 mm à 1,20 mm, à l'écart (a₄) de la ligne de profil de profondeur (T_{E4}) de la ou de chaque incision centrale (4).

3. Pneumatique de véhicule selon la revendication 1 ou 2, présentant la caractéristique b), **caractérisé en ce que** l'écart (a₄) de la ligne de profil de profondeur (T_{E4}) de la ou de chaque incision centrale (4) est de 0,30 mm à 1,20 mm, notamment jusqu'à 1,00 mm, de préférence jusqu'à 0,80 mm.

4. Pneumatique de véhicule selon l'une quelconque des revendications 1 à 3, présentant la caractéristique a), **caractérisé en ce que** chaque incision latérale (5) présente exactement une ou exactement deux surélévation(s) de fond (10') libre(s) de plus que la ou chaque incision centrale (4).

5. Pneumatique de véhicule selon la revendication 1 ou 4, présentant la caractéristique a), **caractérisé en ce que** les surélévations de fond (10, 10') libres présentent, par rapport à la périphérie de la bande de roulement dans la direction radiale, un écart (a₁, a₁') déterminé comme étant l'écart le plus faible possible, l'écart (a₁) de la ou des surélévation(s) de fond (10) libre(s) dans la ou dans chaque incision centrale (4) étant de 2,00 mm à 4,00 mm et l'écart (a₁') de la ou des surélévation(s) de fond (10') libre(s) dans chaque incision latérale (5) étant de 1,00 mm à 3,00 mm, l'écart (a₁) de la ou des surélévation(s) de fond (10) libre(s) dans la ou dans chaque incision centrale (4) étant supérieur d'au moins 0,50 mm, de préférence de 1,00 mm à 1,50 mm, à l'écart (a₁') de la ou des surélévation(s) de fond (10') libre(s) dans chaque incision latérale (5).

6. Pneumatique de véhicule selon l'une quelconque des revendications 1 à 5, présentant la caractéristique a), **caractérisé en ce que** les surélévations de fond (10, 10') libres sont chacune délimitées, dans la direction radiale, par une section de fond d'incision (6e) du fond d'incision (6) s'étendant parallèlement à la périphérie de la bande de roulement, la section de fond d'incision (6e), considérée en coupe longitudinale à travers l'incision (4, 5), présentant une largeur (b_{G3}), mesurée parallèlement à la périphérie de la bande de roulement, de 1,5 mm à 3,0 mm, notamment jusqu'à 2,5 mm.

7. Pneumatique de véhicule selon la revendication 6, **caractérisé en ce que** chaque surélévation de fond (10, 10'), considérée en coupe longitudinale à travers l'incision (4, 5), est délimitée latéralement par deux sections de fond d'incision (6f) s'étendant selon une forme allongée en S, chacune présentant une sous-section médiane rectiligne (6f'), les sous-sections (6f') formant entre elles un angle (β) de 8° à 12° et se rapprochant l'une de l'autre en direction de la périphérie de la bande de roulement.

8. Pneumatique de véhicule selon l'une quelconque des revendications 1 à 7, **caractérisé en ce que** la ou chaque incision centrale (4) et les incisions latérales (5), considérées respectivement en coupe longitudinale, présentent chacune, à proximité de chaque extrémité d'incision, une surélévation de fond latérale (8, 8', 9, 9'), les surélévations de fond latérales (8, 8') qui sont en outre adjacentes à la ou aux autre(s) rainure(s) (3) présentant, par rapport à la périphérie de la bande de roulement dans la direction radiale, un écart (a₁, a₁') déterminé comme étant l'écart le plus faible possible, l'écart (a₁) de cette ou de ces surélévation(s) de fond latérale(s) (8) dans la ou dans chaque incision centrale (4) étant de 2,00 mm à 4,00 mm et l'écart (a₁') de cette ou de ces surélévation(s) de fond latérale(s) (8') dans chaque incision latérale (5) étant de 1,00 mm à 3,00 mm, l'écart (a₁) de cette ou de ces surélévation(s) de fond latérale(s) (8) dans la ou dans chaque incision centrale (4) étant supérieur d'au moins 0,50 mm, de préférence de 1,00 mm à 1,50 mm, à l'écart (a₁') de cette ou de ces surélévation(s) de fond latérale(s) (8') dans chaque incision latérale (5).
